# EUROPÄISCHE PATENTANMELDUNG

(11) **EP 4 368 273 A1**
(43) Veröffentlichungstag der Anmeldung: **15.05.2024**
(21) Anmeldenummer: 22206153.3
(22) Anmeldetag: 08.11.2022
(51) Int. Cl.: B01D 39/16

(54) **HYDRAULIKKREIS**

(71) Anmelder: Filtration Group GmbH, 74613 Öhringen (DE)
(72) Erfinder: BAUTZ, Marco, 75015 Bretten (DE)
(74) Vertreter: BRP Renaud & Partner mbB Rechtsanwälte Patentanwälte Steuerberater

(57) **Zusammenfassung**

Die Erfindung betrifft einen Hydraulikkreis (1) zum Zirkulieren eines Hydraulikmittels (8) für eine Maschine (3), mit einer Filtereinrichtung (6) zum Filtern des Hydraulikmittels (8) und mit einer Steuereinrichtung (7) zum Betreiben des Hydraulickreises (1), wobei die jeweilige Filtereinrichtung (6) wenigstens ein Filterelement (10) aufweist, das einen Filterkörper (12) mit einem Filtermaterial (13) aufweist, wobei das jeweilige Filterelement (10) so in der zugehörigen Filtereinrichtung (6) angeordnet ist, dass im Betrieb des Hydraulikkreises (1) das Filtermaterial (13) vom Hydraulikmittel (8) durchströmt wird.

Eine bessere Filtration bei unterschiedlichen Betriebsphasen des Hydraulikkreises (1) wir erreicht, wenn das Filtermaterial (13) elektroaktive Fasern (14) aus einem elektroaktiven Polymer aufweist, die in Abhängigkeit einer daran anliegenden elektrischen Spannung ihre geometrische Form und/oder Größe verändern, wenn das Filtermaterial (13) so konfiguriert ist, dass das Verändern der Form und/oder Größe der elektroaktiven Fasern (14) eine Porengröße des Filtermaterials (13) verändert, und wenn die Steuereinrichtung (7) mit der jeweiligen Filtereinrichtung (6) elektrisch gekoppelt und so konfiguriert ist, dass sie in Abhängigkeit einer Viskosität des Hydraulikmittels (8) das Filtermaterial (13) des jeweiligen Filterelements (10) zum Verändern der Porengröße ansteuert.

## Beschreibung

Die vorliegende Erfindung betrifft einen Hydraulikkreis zum Zirkulieren eines Hydraulikmittels für eine Maschine, insbesondere zum Betreiben und/oder Kühlen und/oder Schmieren wenigstens einer Komponente der Maschine. Die Erfindung betrifft außerdem ein Filterelement für einen solchen Hydraulikkreis sowie eine damit ausgestattete Maschine.

Maschinen, bei denen Hydraulikkreise dieser Art, die auch als Hydraulikanlagen bezeichnet werden können, zum Einsatz kommen, sind beispielsweise hydraulisch betriebene Maschinen oder Maschinen mit hydraulisch betriebenen Maschinenkomponenten, wie z.B. Hydraulikaggregate, insbesondere in Form von Kolben-Zylinder-Aggregaten, die mit dem Hydraulikmittel zur Kraftübertragung betrieben werden. Solche Maschinen sind insbesondere Baumaschinen. Andere Maschinen, bei denen derartige Hydraulikkreise zum Einsatz kommen, sind beispielsweise Fertigungsmaschinen, bei denen Komponenten mit dem Hydraulikmittel betrieben und/oder gekühlt und/oder geschmiert werden. Bei diesen Fertigungsmaschinen handelt es sich beispielsweise um Maschinen zur spanabhebenden Bearbeitung von Werkstücken. Ein derartiger Hydraulikkreis kann grundsätzlich auch bei einer Brennkraftmaschine zum Einsatz kommen, um Bereiche zu kühlen bzw. zu schmieren. Die Brennkraftmaschine bildet dann die Maschine. Zylinder und Lager der Brennkraftmaschine bilden typische Komponenten, die gekühlt und/oder geschmiert werden.

Als Hydraulikmittel kann je nach der gewünschten Funktion grundsätzlich jede beliebige, für die jeweilige Funktion geeignete Flüssigkeit zum Einsatz kommen, also insbesondere typische Kühlmittel bzw. typische Schmierstoffe oder typische Hydrauliköle als Betriebsstoffe. Beispielsweise handelt es sich beim Hydraulikmittel um einen Kühlschmierstoff, wenn es hauptsächlich zum Kühlen und Schmieren genutzt wird. Wird es dagegen hauptsächlich zum Betreiben, also zur hydraulischen Kraftübertragung genutzt, kann es sich beim Hydraulikmittel bevorzugt um ein Hydrauliköl handeln, z.B. auf mineralischer oder synthetischer oder mineralisch-synthetischer Basis.

Die bei solchen Hydraulikkreisen zum Einsatz kommenden Hydraulikmittel können eine temperaturabhängige Viskosität besitzen, insbesondere dann, wenn es sich um ein ölhaltiges Hydraulikmittel handelt. Dies ist insbesondere bei Schmierstoffen und Kühlschmierstoffen der Fall.

Ein Hydraulikkreis besitzt zweckmäßig eine Filtereinrichtung, in der zumindest ein Filterelement angeordnet ist, das während des Betriebs des Hydraulikkreises vom Hydraulikmittel durchströmt wird. Die Filtereinrichtung dient dabei in üblicherweise dazu, Verunreinigungen aus dem Hydraulikmittel herauszufiltern. Je nach Toleranz oder Sensibilität der zu betreibenden bzw. zu kühlenden bzw. zu schmierenden Maschine bzw. Maschinenkomponente, wird für die Filtereinrichtung bzw. für deren Filterelement eine mehr oder weniger starke Reinigungswirkung bzw. Filterwirkung benötigt. Dabei korreliert die Filterwirkung des Filterelements mit einem Durchströmungswiderstand des Filterelements. Je höher die Filterwirkung, desto höher ist der Durchströmungswiderstand. Der vom jeweiligen Filterelement tolerierbare Durchströmungswiderstand ist jedoch in der Regel begrenzt. Bei einer Überschreitung des tolerierbaren Durchströmungswiderstands bzw. Differenzdrucks zwischen Anströmseite und Abströmseite des jeweiligen Filterelements kann es zu einer Beschädigung des Filterelements und somit zu einer Leckage kommen. In der Folge kann das Hydraulikmittel durch die Leckage ungefiltert durch das Filterelement strömen. Ebenso kann der überhöhte Druck auch zu einer Beschädigung angrenzender Komponenten führen.

Problematisch in diesem Zusammenhang ist der Einsatz von Hydraulikmitteln, die eine temperaturabhängige Viskosität besitzen. Während des Betriebs des Hydraulikkreises erwärmt sich das Hydraulikmittel. Dabei ist der Hydraulikkreis für einen Nennbetrieb oder Normalbetrieb ausgelegt, bei dem sich das Hydraulikmittel in einem Temperaturbereich befindet, der regelmäßig oberhalb einer Umgebungstemperatur bzw. oberhalb einer Temperatur liegt, die das Hydraulikmittel beim Start des Hydraulikkreises besitzt. Die Filtereinrichtung bzw. das jeweilige Filterelement ist zweckmäßig für den Nennbetrieb des Hydraulikkreises ausgelegt, um dort die gewünschte Filtrationsaufgabe optimal erfüllen zu können. Während des Nennbetrieb besitzt das Hydraulikmittel eine erhöhte Temperatur und somit eine reduzierte Viskosität, sodass sich am Filterelement ein reduzierter Durchströmungswiderstand einstellt. Beim Starten des Hydraulikkreises bzw. während eines Startbetriebs des Hydraulikkreises besitzt das Hydraulikmittel jedoch eine reduzierte Temperatur und somit eine höhere Viskosität, was am Filterelement zu einem erhöhten Durchströmungswiderstand führt.

Damit das für den Nennbetrieb ausgelegte Filterelement sowie gegebenenfalls angrenzende Komponenten während des Startbetriebs nicht beschädigt wird bzw. werden, kann die Filtereinrichtung mit einem das jeweilige Filterelement umgehenden Bypass ausgestattet sein, in dem ein Überdrucköffnungsventil angeordnet ist. Wenn sich während des Startbetrieb aufgrund der höheren Viskosität des Hydraulikmittels am Filterelement eine unzulässig hohe Druckdifferenz aufbaut, öffnet das Überdrucköffnungsventil den Bypass, wodurch das Filterelement entlastet wird. Nachteilig ist dabei, dass der jeweiligen Maschine dann ungefiltertes Hydraulikmittel zum Betreiben und/oder Kühlen und/oder Schmieren zugeführt wird. Somit ergibt sich insbesondere während des Startbetrieb eine erhöhte Beschädigungsgefahr für die jeweilige Maschine bzw. Maschinenkomponente durch im Hydraulikmittel mitgeführte Verunreinigungen.

Alternativ dazu ist denkbar, die Filtereinrichtung für die während des Startbetriebs herrschende höhere Viskosität auszulegen, was jedoch mit einer reduzierten Filterwirkung einhergeht. Für Maschinen bzw. Maschinenkomponenten mit niedrigerer Toleranz bzw. höherer Sensibilität gegenüber Verunreinigungen erhöht sich dadurch die Gefahr von Beschädigungen während des Nennbetriebs.

Ferner ist denkbar, in der Filtereinrichtung zwei Filterelemente mit unterschiedlicher Filterwirkung vorzusehen, sodass bei niedriger Temperatur des Hydraulikmittels das eine Filterelement mit reduzierter Filterwirkung durchströmt wird, während bei höherer Temperatur des Hydraulikmittels das Filterelement mit höherer Filterwirkung durchströmt wird. Ein derartiger Aufbau ist extrem aufwendig und bauraum intensiv und dadurch besonders teuer.

Aus der DE 10 2016 213 565 A1 ist ein Filterelement bekannt, dessen Filtermaterial eine Porengröße aufweist, die mittels elektrischer Energie verändert werden kann. Erreicht wird dies durch ein Filtermaterial, das eine Basisstruktur für die jeweilige Filtrationswirkung und eine Funktionsstruktur aufweist, die fest mit der Basisstruktur verbunden ist und die bei einer Bestromung ihre Form und/oder Größe verändert, wodurch sich die Porengröße der Basisstruktur und somit des Filtermaterials verändert. Beim bekannten Filterelement wird, während eines Regenerationsbetriebs durch eine Bestromung der Funktionsstruktur die Porengröße des Filtermaterials erhöht, um beim Abstreifen oder Rückspülen des Filterelements die Reinigung bzw. Regeneration des Filtermaterials zu verbessern.

Aus der DE 10 2013 013 396 A1 ist ein Filter mit variabler Porosität bekannt. Dabei ist ein poröses Basismaterial mit einer Vielzahl durchgängiger Poren gebildet, in denen jeweils ein Schaltmaterial angeordnet ist, dessen räumliche Struktur und/oder Ausdehnung durch einen externen Steuereingriff veränderbar ist. In der Folge führt der jeweilige Steuereingriff zu einer Veränderung der Durchlässigkeit der jeweiligen Poren und somit zu einer Veränderung der Porosität. Als Schaltmaterial kommt dabei beispielsweise ein Mikrogel zum Einsatz, das beispielsweise auf eine Änderung des pH-Werts oder der Temperatur oder auf das Vorliegen eines Lösungsmittels mit einer Änderung seiner räumlichen Struktur und/oder Ausdehnung reagiert. Der bekannte Filter kommt bei Anlagen zum Einsatz, in denen verschiedene Prozesse durchgeführt werden können, die unterschiedliche Filterwirkungen erfordern. Beim bekannten Filter erfolgt der Steuereingriff zum Verändern der Porengröße, um das jeweilige Filterelement an die jeweils geforderte Filterwirkung anzupassen.

Die vorliegende Erfindung beschäftigt sich mit dem Problem, für einen Hydraulickreis der vorstehend beschriebenen Art bzw. für ein zugehöriges Filterelement bzw. für eine damit ausgestattete Maschine eine verbesserte oder zumindest eine andere Ausführungsform anzugeben, bei der insbesondere eine ausreichende Filterwirkung für das Hydraulikmittel bereitgestellt wird, um Beschädigungen an der jeweiligen Maschine bzw. an der jeweiligen Maschinenkomponente durch Verunreinigungen zu vermeiden.

Das vorstehend genannte Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, das Filtermaterial des Filterelements mit elektroaktiven Fasern zu bilden oder auszustatten, die aus einem elektroaktiven Polymer bestehen. Die elektroaktiven Fasern verändern in Abhängigkeit einer daran anliegenden elektrischen Spannung ihre geometrische Form und/oder Größe. Des Weiteren wird das Filtermaterial so konfiguriert, dass das verändern der Form und/oder Größe der elektroaktiven Fasern eine Porengröße des Filtermaterials verändert. Somit ist durch das Anlegen einer Spannung an die elektroaktiven Fasern des Filtermaterials die Porengröße des Filtermaterials veränderbar. Von entscheidender Bedeutung ist nun, dass eine Steuereinrichtung zum Betreiben des Hydraulikkreises mit der jeweiligen Filtereinrichtung elektrisch gekoppelt und so konfiguriert wird, dass die Steuereinrichtung in Abhängigkeit einer Viskosität des Hydraulikmittels das Filtermaterial des jeweiligen Filterelements zum Verändern der Porengröße ansteuert. Dies hat zur Folge, dass während des Betriebs des Hydraulikkreises die Porengröße des Filtermaterials und somit die Filterwirkung des Filterelements und damit der durch Strömungswiderstand des Filterelements an die Viskosität des Hydraulikmittels anpassbar ist. Insbesondere lässt sich damit der Durchströmungswiderstand des Filterelements für ein vergleichsweise kaltes Hydraulikmittel reduzieren, sodass das Filterelement weiterhin vom Hydraulikmittel durchströmbar ist. Somit lassen sich vergleichsweise grobe Verunreinigungen noch immer aus dem Hydraulikmittel herausfiltern, die für die betriebene bzw. gekühlte bzw. geschmierte Maschine bzw. Maschinenkomponente kritisch sein können. Für eine höhere Viskosität des Hydraulikmittels lässt sich dann die Porengröße reduzieren, um die Filterwirkung zu verbessern. Somit kann für hohe Temperaturen des Hydraulikmittels, die insbesondere im Nennbetrieb vorliegen, eine optimierte Filterwirkung realisiert werden, während für niedrige Temperaturen des Hydraulikmittels weiterhin eine gewisse Filterwirkung gewährleistet ist, wobei gleichzeitig Gefahr einer Beschädigung des Filterelements reduziert ist.

Im Einzelnen wird für den erfindungsgemäßen Hydraulikkreis vorgeschlagen, dass dieser ein Leitungssystem zum Führen des Hydraulikmittels aufweist, mit dem der Hydraulikkreis an zumindest eine mit dem Hydraulikmittel zu betreibende und/oder zu kühlende und/oder zu schmierende Maschine bzw. Maschinenkomponente anschließbar oder angeschlossen ist. In das Leitungssystem sind wenigstens eine Fördereinrichtung zum Antreiben des Hydraulikmittels, wenigstens ein Reservoir zum Bevorraten des Hydraulikmittels und wenigstens eine Filtereinrichtung zum Filtern des Hydraulikmittels eingebunden. Ferner weist der Hydraulikkreis eine Steuereinrichtung zum Betreiben des Hydraulikkreises auf. Die jeweilige Filtereinrichtung weist zumindest ein Filterelement auf, das einen Filterkörper mit einem Filtermaterial aufweist, wobei das jeweilige Filterelement so in der zugehörigen Filtereinrichtung angeordnet ist, dass im Betrieb des Hydraulikkreises das Filtermaterial vom Hydraulikmittel durchströmt wird.

Elektroaktive Polymere sind Polymere, die durch das Anlegen einer elektrischen Spannung ihre Form ändern. Derartige elektroaktive Polymere werden zum Aufbau von Aktoren oder Sensoren verwendet. Sie werden aufgrund der Ähnlichkeit ihrer Funktionsweise zu natürlichen Muskeln häufig auch als "künstliche Muskeln" bezeichnet. Im Allgemeinen wird zwischen ionischen elektroaktiven Polymeren und elektronischen elektroaktiven Polymeren unterschieden. Bei ionischen elektroaktiven Polymeren beruht der Wirkungsmechanismus auf Massentransport bzw. Diffusion von Ionen. Untergruppen solcher elektroaktive Polymere sind leitfähige Polymere, ionische Metall-Polymer-Komposite und ionische Gele. Die Wirkungsweise elektronischer elektroaktiver Polymere beruht hingegen auf elektronischem Ladungstransport. Zu dieser Gruppe werden elektrostriktive und ferroelektrische Polymere gezählt sowie dielektrische Elastomere.

Im vorliegenden Zusammenhang wird unter einer Konfiguration eine Ausgestaltung und/oder Programmierung verstanden, sodass die Formulierung "konfiguriert" gleichbedeutend ist mit der Formulierung "ausgestaltet und/oder programmiert".

Zweckmäßig kann die Filtereinrichtung bezüglich der Strömungsrichtung des Hydraulikmittels stromab der Fördereinrichtung und stromauf der jeweiligen Maschine bzw. Maschinenkomponente angeordnet sein. Das Reservoir kann sich zweckmäßig stromauf der Fördereinrichtung und stromab der jeweiligen Maschine bzw. Maschinenkomponente befinden, sodass die Fördereinrichtung das Hydraulikmittel aus dem Reservoir ansaugt, während das Hydraulikmittel von der jeweiligen Maschine bzw. Maschinenkomponente zum Reservoir zurückgeführt wird.

Entsprechend einer vorteilhaften Ausführungsform kann die Steuereinrichtung so konfiguriert sein, dass sie bei einer ersten Viskosität, die größer ist als eine zweite Viskosität, eine erste Porengröße einstellt, die größer ist als eine zweite Porengröße, die bei der zweiten Viskosität eingestellt wird. Damit ist klar, dass mit zunehmender Viskosität bzw. Zähigkeit des Hydraulikmittels die Porengröße vergrößert wird, um den Druckanstieg am Filtermaterial zu reduzieren bzw. zu kompensieren.

Die Porengröße kann dabei gemäß allen gängigen und üblichen Methoden ermittelt werden. Klar ist, dass eine geringere Porengröße zu einer verbesserten Filterwirkung und zu einem erhöhten Durchströmungswiderstand führt. Exemplarisch wird auf die Bestimmung der geometrischen Porengröße verwiesen, die durch den Durchmesser der größten Kugel definiert ist, die das Filtermaterial gerade noch passieren kann. Die geometrische Porengröße lässt sich auf Basis charakteristischer Gewebeparameter wie Bindungsart, Faserdurchmesser und Maschendichte (Meshcount) berechnen.

Gemäß einer besonders vorteilhaften Weiterbildung kann die Steuereinrichtung so konfiguriert sein, dass sie bei der ersten Viskosität zum Einstellen der ersten Porengröße eine vorbestimmte erste Spannung am Filtermaterial anlegt, während sie bei der zweiten Viskosität zum Einstellen der zweiten Porengröße entweder eine zweite Spannung, die kleiner ist als die erste Spannung, oder keine Spannung am Filtermaterial anlegt. Je größer die am Filtermaterial anliegende elektrische Spannung, desto größer die Kontraktion der elektroaktiven Fasern. In diesem Fall ist das Filtermaterial so konfiguriert, dass mit zunehmender Kontraktion der elektroaktiven Fasern die Porengröße vergrößert wird. Besonders vorteilhaft ist dabei eine Ausgestaltung, bei der die Steuereinrichtung zum Einstellen der zweiten Porengröße keine Spannung am Filtermaterial anlegt. Hierzu ist das Filtermaterial so konfiguriert, dass bei entspannten elektroaktiven Fasern die zweite Porengröße vorliegt, die hinsichtlich der für den Nennbetrieb des Hydraulikkreises gewünschten Filterwirkung ausgelegt ist. Insbesondere ist das Filtermaterial hierzu so konfiguriert, dass es hinreichend elastisch ist und sich selbsttätig wieder in einen Ausgangszustand mit der zweiten Porengröße entspannt, wenn die Spannung reduziert oder abgenommen wird. Somit wird eine Bestromung bzw. das Anlegen einer Spannung nur für die vergleichsweise kurze Zeit eines Startbetriebs benötigt.

Zweckmäßig kann die Steuereinrichtung so konfiguriert sein, dass sie die aktuelle Viskosität mit einer vorbestimmten Grenzviskosität vergleicht und davon ausgeht, dass die erste Viskosität vorliegt, wenn die aktuelle Viskosität oberhalb der Grenzviskosität ist, und davon ausgeht, dass die zweite Viskosität vorliegt, wenn die aktuelle Viskosität kleiner ist als die Grenzviskosität. In diesem Fall ist die Konfiguration der Steuereinrichtung so gewählt, dass nur zwei unterschiedliche Porengrößen bzw. Porositäten bzw. Filterwirkungen einstellbar sind, nämlich eine normale oder höhere Filterwirkung für Viskositäten unterhalb der Grenzviskosität und eine diesbezüglich reduzierte Filterwirkung für Viskositäten oberhalb der Grenzviskosität. Hierdurch ergibt sich ein besonders einfacher Aufbau für die Steuereinrichtung und den Hydraulikkreis. Es ist klar, dass die Grenzviskosität selbst von der Steuereinrichtung je nach Konfiguration der ersten oder der zweiten Viskosität zugeordnet werden kann.

Alternativ ist ebenso denkbar, dass mithilfe der Steuereinrichtung nicht nur zwei unterschiedliche Viskositäten berücksichtigt werden, sondern mehrere, insbesondere beliebig viele, sodass auch mehr als zwei unterschiedliche Porengrößen einstellbar sind. Insbesondere ist denkbar, dass die Porengröße in mehreren Stufen oder stufenlos an die variierende Viskosität angepasst werden kann.

Zweckmäßig kann die Steuereinrichtung so konfiguriert sein, dass sie den Hydraulikkreis in einem Nennbetrieb und in einem Startbetreib betreiben kann, wobei die Steuereinrichtung für den Startbetrieb die Filtereinrichtung zum Einstellen einer ersten Porengröße ansteuert, wobei die Steuereinrichtung für den Nennbetrieb die Filtereinrichtung zum Einstellen einer zweiten Porengröße ansteuert, wobei die erste Porengröße größer ist als die zweite Porengröße.

Gemäß einer anderen vorteilhaften Ausführungsform kann die zweite Viskosität einem Nennbetrieb des Hydraulikkreises zugeordnet sein. Zusätzlich oder alternativ kann die erste Viskosität einem Startbetrieb des Hydraulikkreises zugeordnet sein. Insbesondere kann dadurch gewährleistet werden, dass die Steuereinrichtung beim Start des Hydraulikkreises zunächst von der ersten Viskosität ausgeht und für den Start des Hydraulikkreises gleich die erste Porengröße am Filterelement einstellt.

Für den Wechsel zum Nennbetrieb kann die Steuereinrichtung beispielsweise eine vorbestimmte Zeitspanne berücksichtigen, die für den Startbetrieb vorgesehen ist, sodass die Steuereinrichtung nach Beendigung des Startbetriebs davon ausgeht, dass nunmehr die zweite Viskosität vorliegt und in den Nennbetrieb umschaltet.

Ebenso ist denkbar, dass der Hydraulikkreis wenigstens einen Temperatursensor zum Ermitteln der Temperatur des Hydraulikmittels aufweist, wobei die Steuereinrichtung elektrisch mit dem jeweiligen Temperatursensor gekoppelt ist und außerdem so konfiguriert ist, dass sie die Viskosität des Hydraulikmittels in Abhängigkeit der Temperatur des Hydraulikmittels ermittelt. Die Temperatur des Hydraulikmittels korreliert unmittelbar mit dessen Viskosität, sodass die Steuereinrichtung anhand der Temperatur des Hydraulikmittels die Viskosität des Hydraulikmittels kennt. Beispielsweise kann der jeweilige Temperatursensor im oder am Reservoir oder in oder an der Filtereinrichtung angeordnet sein. Ebenso sind andere Positionierungen und Anordnungen für den jeweiligen Temperatursensor denkbar.

Zusätzlich oder alternativ kann vorgesehen sein, dass der Hydraulikkreis wenigstens einen Drucksensor zum Ermitteln des Drucks des Hydraulikmittels aufweist, wobei die Steuereinrichtung elektrisch mit dem jeweiligen Drucksensor gekoppelt ist und so konfiguriert ist, dass sie die Viskosität des Hydraulikmittels in Abhängigkeit des Drucks des Hydraulikmittels ermittelt. Der Durchströmungswiderstand des Filterelements korreliert mit der Viskosität des Hydraulikmittels. In der Folge korreliert der Druck im Hydraulikmittel stromauf und auch stromab des Filterelements mit der Viskosität des Hydraulikmittels. Ist die Viskosität beispielsweise größer als im Nennbetrieb, steigt der Druck anströmseitig des Filterelements, während er abströmseitig des Filterelements konstant bleibt oder abfällt, je nach Konfiguration des Hydraulikkreises z.B. als offener oder geschlossener Kreis. Jedenfalls nimmt der Differenzdruck am Filterelement zwischen Anströmseite und Abströmseite zu. Dementsprechend kann die Steuereinrichtung anhand des Hydraulikdrucks die Viskosität ermitteln, zumindest relativ.

Zweckmäßig kann der jeweilige Drucksensor so angeordnet sein, dass er den Druck stromauf oder stromab des Filterkörpers ermittelt. Ebenso ist denkbar, dass zumindest zwei solche Drucksensoren vorgesehen sind, die so angeordnet sind, dass sie den Druck stromauf und stromab des Filterkörpers ermitteln. Mit dem Drucksensor, der sich stromauf des Filterkörpers befindet, lässt sich der anströmseitige Druck überwachen, sodass ein übermäßiger Druckanstieg erkannt werden kann, der beispielsweise für das Vorliegen der ersten Viskosität spricht. Mit dem stromab des Filtermaterials angeordneten Drucksensor lässt sich dann auf das Vorliegen der ersten Viskosität schließen, wenn abströmseitig ein vorbestimmter Mindestdruck nicht erreicht wird. Mit den beiden Drucksensoren lässt sich der Differenzdruck am Filterelement bzw. am Filterkörper ermitteln, wobei die Steuereinrichtung von der ersten Viskosität ausgeht, wenn der Differenzdruck einen vorbestimmten Grenzwert übersteigt.

Grundsätzlich kann das Filtermaterial aus den elektroaktiven Fasern bestehen. Das bedeutet, dass alle Fasern des Filtermaterials elektroaktiv sind.

Bevorzugt ist jedoch eine Ausführungsform, bei der das Filtermaterial aus einem Gemisch aus elektroaktiven Fasern und anderen Fasern besteht, wobei die anderen Fasern aus einem elektrisch nicht aktiven Material bestehen. Die anderen Fasern unterscheiden sich dadurch von den elektroaktiven Fasern, dass sich ihre Form und/oder Größe durch Anlegen einer elektrischen Spannung nicht oder zumindest nicht in dem Maße wie bei den elektroaktiven Fasern verändert.

Besonders vorteilhaft ist eine Ausführungsform, bei der das Filtermaterial wenigstens zweilagig ausgestaltet ist, sodass es eine erste Lage und eine zweite Lage aufweist, die fest miteinander verbunden sind. Es ist klar, dass das Filtermaterial auch mehr als zwei Lagen aufweisen kann, sodass insbesondere auch eine dritte Lage und gegebenenfalls weitere Lagen vorgesehen sein können. Jedenfalls weist die erste Lage die elektroaktiven Fasern auf, während die zweite Lage keine elektroaktiven Fasern aufweist. Die zweite Lage kann grundsätzlich ein beliebiges Partikelfiltermaterial sein mit oder ohne Fasern.

Zweckmäßig ist eine Ausführungsform, bei der die erste Lage mit der zweiten Lage verklebt und/oder kaschiert ist. Hierdurch ist es insbesondere möglich, die erste Lage und die zweite Lage separat voneinander herzustellen und zur Ausbildung des Filtermaterials zusammenzuführen und miteinander zu verbinden. Auch ist denkbar, zuerst die eine Lage herzustellen und später im Herstellungsprozess des Filtermaterials die andere Lage unmittelbar auf der bereits hergestellten einen Lage herzustellen.

Alternativ dazu ist es ebenso möglich, dass im Filtermaterial ein Kontaktbereich ausgebildet ist, in dem die erste Lage mit der zweiten Lage in Kontakt steht, wobei die Fasern der ersten Lage mit Fasern der zweiten Lage in Eingriff stehen. In diesem Fall ist die zweite Lage ebenfalls mit Fasern gebildet, jedoch mit anderen Fasern, die aus einem elektrisch nicht aktiven Material bestehen. Die Ausbildung des Kontaktbereichs lässt sich im Rahmen einer Herstellung des Filtermaterials realisieren, bei der die beiden Lagen quasi gleichzeitig hergestellt und zum Filtermaterial zusammengeführt werden. Herstellungstechnisch lässt sich dabei im Kontaktbereich das Ineinandergreifen der Fasern der aneinander angrenzenden Lagen erzielen. Beispielsweise werden die Lagen nass hergestellt und in einem nassen Zustand zum Filtermaterial zusammengeführt und gemeinsam getrocknet, wodurch sich im Kontaktbereich der Faserverbund zwischen den Fasern der ersten Lage und den Fasern der zweiten Lage ergibt.

Entsprechend einer vorteilhaften Ausführungsform kann die jeweilige Filtereinrichtung ein Filtergehäuse aufweisen, das außen einen elektrischen Gehäuseanschluss aufweist, der mit der Steuereinrichtung elektrisch verbunden ist. Ferner kann das Filtergehäuse innen zwei elektrische Gehäusekontakte aufweisen, die mit dem Gehäuseanschluss elektrisch verbunden sind. Des Weiteren kann nun das jeweilige Filterelement zwei elektrische Elementkontakte aufweisen, über die eine elektrische Spannung an das Filtermaterial anlegbar ist. Bei in das Filtergehäuse eingesetztem Filterelement sind die beiden Elementkontakte mit den dazu komplementären Gehäusekontakten elektrisch kontaktiert. Somit kann die Steuereinrichtung über den Gehäuseanschluss, die Gehäusekontakte und die Elementkontakte die jeweils gewünschte elektrische Spannung an das Filtermaterial anlegen, um die gewünschte Porengröße einzustellen.

Ein erfindungsgemäßes Filterelement, das für eine Verwendung in einem Hydraulikkreis der vorstehend beschriebenen Art vorgesehen und bestimmt ist, besitzt zum Filtern eines Hydraulikmittels einen Filterkörper, der ein vom Hydraulikmittel durchströmbares Filtermaterial aufweist. Ferner weist das Filterelement zwei elektrische Elementkontakte auf, über die eine elektrische Spannung an das Filtermaterial anlegbar ist. Das Filtermaterial weist elektroaktive Fasern aus einem elektroaktiven Polymer auf, die in Abhängigkeit einer daran anliegenden elektrischen Spannung ihre geometrische Form und/oder Größe verändern. Außerdem ist das Filtermaterial so konfiguriert, dass das Verändern der Form und/oder Größe der elektroaktiven Fasern eine Porengröße des Filtermaterials verändert.

Eine erfindungsgemäße Maschine weist wenigstens eine Maschinenkomponente, die mit einem Hydraulikmittel betrieben und/oder gekühlt und/oder geschmiert wird, und wenigstens einen Hydraulikkreis der vorstehend beschriebenen Art auf, wobei die jeweilige Maschinenkomponente in das Leitungssystem des Hydraulickreises eingebunden ist, so dass die jeweilige Maschinenkomponente mit dem Hydraulikmittel des Hydraulikkreises betrieben und/oder gekühlt und/oder geschmiert werden kann. Die Maschine kann eine Baumaschine wie z.B. ein Kran, ein Bagger, eine Raupe, eine Fräsmaschine, eine Planiermaschine oder dergleichen sein, wobei die jeweilige Maschinenkomponente insbesondere durch ein hydraulisches Kolben-Zylinder-Aggregat gebildet sein kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den durch die Ansprüche definierten Rahmen der Erfindung zu verlassen. Vorstehend genannte und nachfolgend noch zu nennende Bestandteile einer übergeordneten Einheit, wie z.B. einer Einrichtung, einer Vorrichtung oder einer Anordnung, die separat bezeichnet sind, können separate Bauteile bzw. Komponenten dieser Einheit bilden oder integrale Bereiche bzw. Abschnitte dieser Einheit sein, auch wenn dies in den Zeichnungen anders dargestellt ist.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Figur 1: eine stark vereinfachte, schaltplanartige Prinzipdarstellung eines Hydraulikkreises,
- Figur 2: eine stark vereinfachte, schaltplanartige Schnittansicht einer Filtereinrichtung,
- Figuren 3 bis 5: stark vereinfachte Querschnitte eines Filtermaterials bei verschiedenen Ausführungsformen.

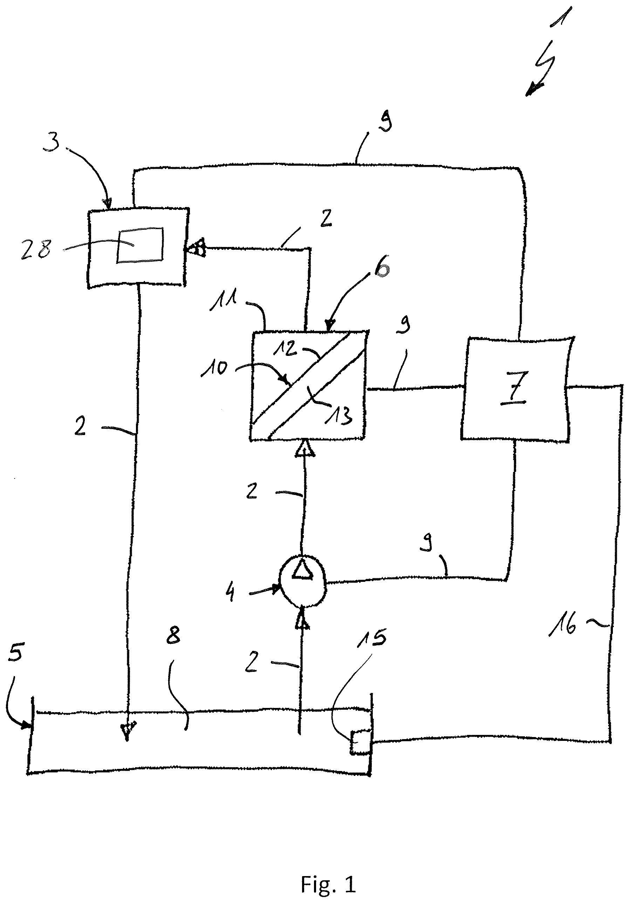

Entsprechend Figur 1 umfasst ein Hydraulikkreis 1 ein Leitungssystem 2, zumindest eine Fördereinrichtung 4, wenigstens ein Reservoir 5, zumindest eine Filtereinrichtung 6 sowie eine Steuereinrichtung 7. Der Hydraulikkreis 1 ist über sein Leitungssystem 2 mit zumindest einer Maschine 3 hydraulisch gekoppelt. Der Hydraulikkreis 1 dient zum Zirkulieren eines Hydraulikmittels 8, wobei das Hydraulikmittel 8 seinerseits zum Betreiben und/oder Kühlen und/oder Schmieren der jeweiligen Maschine 3 oder wenigstens einer Komponente 28 der Maschine 3 dient. Die jeweilige Komponente 28 der Maschine 3 wird im Folgenden als Maschinenkomponente 28 bezeichnet. Das Leitungssystem 2 dient zum Führen des Hydraulikmittels 8 und kann üblicherweise Rohre, Schläuche, Kanäle und sonstige Leitungen aufweisen. Die Maschine 3 bzw. die Maschinenkomponente 28 ist in das Leitungssystem 2 eingebunden bzw. daran angeschlossen, sodass das Hydraulikmittel 8 die Maschine 3 bzw. die jeweilige Maschinenkomponente 28 betreiben bzw. kühlen bzw. schmieren kann. Die jeweilige Maschine 3 repräsentiert eine oder besitzt mit der Maschinenkomponente 28 zumindest eine Hydraulikkomponente und/oder Kühl- und/oder Schmierstelle. Insbesondere kann es sich bei der jeweiligen Maschine 3 bzw. der jeweiligen Maschinenkomponente 28 um ein Hydraulikaggregat, wie z.B. ein Kolben-Zylinder-Aggregat, oder um eine Arbeitsmaschine handeln, wie z.B. eine Werkzeugmaschine oder ein Motor. Es ist klar, dass der Hydraulikkreis 1 auch an zwei, drei oder mehr derartige Maschinen 3 angeschlossen sein kann. Sofern mehrere Maschinen 3 an den Hydraulickreis 1 angeschlossen sind, können diese parallel oder in Reihe in das Leitungssystem 2 eingebunden sein. Ebenso ist denkbar, dass die Maschine 3 mehrere solche Hydraulikkreise 1 aufweist, um mehrere Maschinenkomponenten 28, die hydraulisch betrieben bzw. gekühlt bzw. geschmiert werden, separat mit Hydraulikmittel zu versorgen.

Die Fördereinrichtung 4 dient zum Antreiben des Hydraulikmittels 8 im Hydraulickreis 1 und kann insbesondere als Pumpe ausgestaltet sein. Das Reservoir 5 dient zum Bevorraten des Hydraulikmittels 8. Die Fördereinrichtung 4 saugt das Hydraulikmittel 8 aus dem Reservoir 5 an. Von der jeweiligen Maschine 3 bzw. Maschinenkomponente 28 führt das Leitungssystem 2 das Hydraulikmittel 8 in das Reservoir 5 zurück. Die Filtereinrichtung 6 ist ebenfalls in das Leitungssystem 2 eingebunden und dient zum Filtern des Hydraulikmittels 8. Zweckmäßig ist die Filtereinrichtung 6 dabei zwischen der Fördereinrichtung 4 und der Maschine 3 angeordnet. Die Steuereinrichtung 7 dient zum Betreiben des Hydraulikkreises 1 und ist hierzu insbesondere über entsprechende Steuerleitungen 9 beispielsweise mit der Fördereinrichtung 4 und mit der jeweiligen Maschine 3 elektrisch verbunden.

Die Filtereinrichtung 6 weist zumindest ein Filterelement 10 auf, das insbesondere austauschbar in einem Filtergehäuse 11 der Filtereinrichtung 6 angeordnet sein kann. Das Filterelement 10 besitzt einen Filterkörper 12, der ein Filtermaterial 13 aufweist oder daraus besteht. Das Filterelement 10 ist im Filtergehäuse 11 bzw. in der Filtereinrichtung 6 so angeordnet, dass im Betrieb des Hydraulikkreises 1 das Filtermaterial 13 vom Hydraulikmittel 8 durchströmt wird.

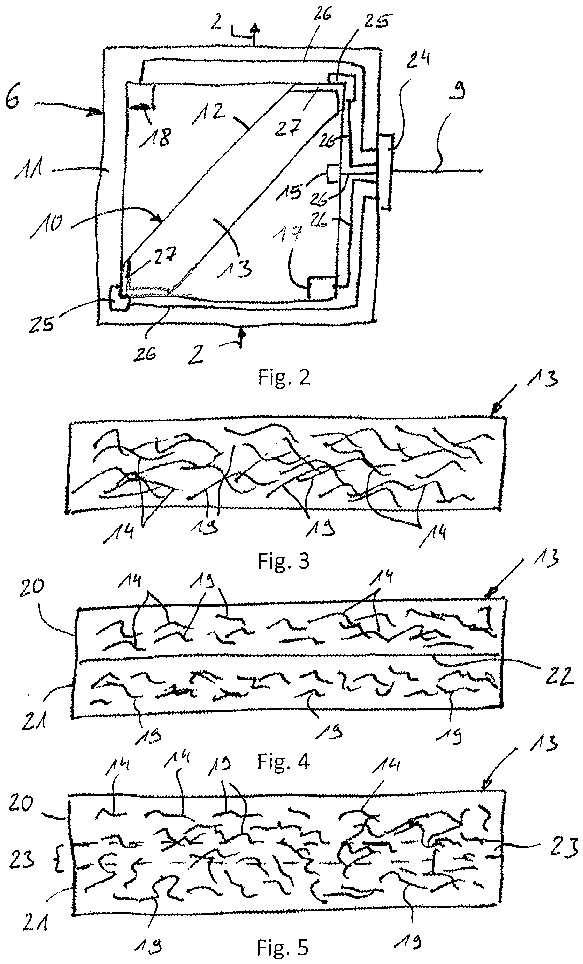

Gemäß den Figuren 3 bis 5 weist das Filtermaterial 13 elektroaktive Fasern 14 aus einem elektroaktiven Polymer auf. Diese elektroaktiven Fasern 14 charakterisieren sich dadurch, dass sie in Abhängigkeit einer daran anliegenden elektrischen Spannung ihre geometrische Form und/oder Größe verändern. Das Filtermaterial 13 ist nun so konfiguriert, dass die Veränderung der Form und/oder Größe der elektroaktiven Fasern 14 eine Porengröße des Filtermaterials 13 verändert. Mit der Porengröße verändert sich die Porosität und somit die Filterwirkung und letztlich auch der Durchströmungswiderstand des Filtermaterials 13 bzw. des Filterelements 10.

Die Steuereinrichtung 7 ist gemäß Figur 1 mit der Filtereinrichtung 6 über eine weitere Steuerleitungen 9 elektrisch gekoppelt. Die Steuereinrichtung 7 ist außerdem so konfiguriert, dass sie in Abhängigkeit einer Viskosität des Hydraulikmittels 8 das Filtermaterial 13 des jeweiligen Filterelements 10 zum Verändern der Porengröße ansteuert.

Zweckmäßig stellt die Steuereinrichtung 7 bei einer ersten Viskosität, die größer ist als eine zweite Viskosität, eine erste Porengröße ein, die größer ist als eine zweite Porengröße. Die Steuereinrichtung 7 stellt dann bei der zweiten Viskosität, die kleiner ist als die erste Viskosität, die zweite Porengröße ein, die kleiner ist als die erste Porengröße.

Hierzu kann die Steuereinrichtung 7 beim Vorliegen der ersten Viskosität zum Einstellen der ersten Porengröße eine vorbestimmte erste Spannung am Filtermaterial anlegen, während sie beim Vorliegen der zweiten Viskosität zum Einstellen der zweiten Porengröße entweder eine zweite Spannung, die kleiner ist als die erste Spannung, oder keine Spannung am Filtermaterial 13 anlegt. Für den Betrieb mit der zweiten Porengröße ist demnach keine Bestromung bzw. kein Anlegen einer Spannung an das Filtermaterial 13 erforderlich, wodurch der Hydraulikkreis 1 besonders effizient arbeitet.

Die Steuereinrichtung 7 kann die jeweilige erste und zweite Viskosität besonders einfach identifizieren, wenn die Steuereinrichtung 7 die aktuelle Viskosität des Hydraulikmittels 8 mit einer vorbestimmten, insbesondere in der Steuereinrichtung 7 gespeicherten Grenzviskosität vergleicht. Ist die aktuelle Viskosität größer als die Grenzviskosität, geht die Steuereinrichtung 7 davon aus, dass die erste Viskosität vorliegt. Ist die aktuelle Viskosität dagegen kleiner als die Grenzviskosität, geht die Steuereinrichtung 7 davon aus, dass die zweite Viskosität vorliegt.

Zweckmäßig kann die Steuereinrichtung 7 so konfiguriert sein, dass die den Hydraulikkreis 1 in einem Startbetrieb und in einem Nennbetrieb betreiben kann. Insbesondere kann die erste Viskosität dem Startbetrieb des Hydraulikkreises 1 zugeordnet sein, während die zweite Viskosität dem Nennbetrieb des Hydraulikkreises 1 zugeordnet ist. Die Steuereinrichtung 7 kann auf eine vorbestimmte Art und Weise nach dem Starten des Hydraulikkreises 1 vom Startbetrieb in den Nennbetrieb umschalten. Dies kann beispielsweise zeitabhängig oder temperaturabhängig oder druckabhängig erfolgen.

Entsprechend Figur 1 kann der Hydraulikkreis 1 wenigstens einen Temperatursensor 15 aufweisen, der im Beispiel der Figur 1 im Reservoir 5 angeordnet ist. In Figur 2 ist dagegen eine andere Ausführungsform dargestellt, bei welcher dieser oder ein weiterer Temperatursensor 15 in der Filtereinrichtung 6 bzw. im Filtergehäuse 11 angeordnet ist. Die Steuerleitungen 9, die zur Kopplung der Steuereinrichtung 7 mit der Filtereinrichtung 6 dient, ist dann auch zur Datenübertragung konfiguriert, so dass die Steuereinrichtung 7 die vom Temperatursensor 15 gemessene Temperatur kennt.

Zweckmäßig ist die Steuereinrichtung 7 elektrisch mit dem jeweiligen Temperatursensor 15 gekoppelt. In Figur 1 erfolgt dies über eine Signalleitung 16. In Figur 2 erfolgt dies über die Steuerleitung 9. Vorteilhaft kann die Steuereinrichtung 7 so konfiguriert sein, dass sie die Viskosität des Hydraulikmittels 8 in Abhängigkeit der Temperatur des Hydraulikmittels 8 ermittelt. Liegt die aktuelle Temperatur des Hydraulikmittels 8 unterhalb einer vorbestimmten Grenztemperatur, geht die Steuereinrichtung 7 davon aus, dass die erste Viskosität vorliegt. Liegt dagegen aktuelle Temperatur des Hydraulikmittels 8 oberhalb der vorbestimmten Grenztemperatur, geht die Steuereinrichtung 7 davon aus, dass die zweite Viskosität vorliegt. Die Grenztemperatur kann dabei der ersten oder der zweiten Viskosität zugeordnet sein.

Zusätzlich oder alternativ zur Ermittlung der Viskosität anhand der Temperatur kann dies auch anhand wenigstens eines Drucks durchgeführt werden. Rein exemplarisch wird hierzu auf Figur 2 verwiesen. Dementsprechend kann der Hydraulikkreis 1 zumindest einen Drucksensor 17, 18 aufweisen, der zum Ermitteln des Drucks im Hydraulikmittel 8 dient. Im Beispiel der Figur 2 sind zwei derartige Drucksensoren 17, 18 vorgesehen. Beide Drucksensoren 17, 18 können z.B. in der Filtereinrichtung 6 bzw. im Filtergehäuse 11 angeordnet sein, derart, dass der eine oder erste Drucksensor 17 den Druck stromauf des Filterkörpers 12 ermittelt, während der andere oder zweite Drucksensor 18 den Druck stromab des Filterkörpers 12 ermittelt. Der jeweilige Drucksensor 17, 18 ist über die Steuerleitungen 9 mit der Steuereinrichtung 7 verbunden. Insbesondere kann die Steuereinrichtung 7 so konfiguriert sein, dass sie die Viskosität des Hydraulikmittels 8 in Abhängigkeit des Drucks des Hydraulikmittels 8 ermittelt.

Beispielsweise kann die Steuereinrichtung 7 einen anströmseitigen Grenzdruck überwachen und das Vorliegen der ersten Viskosität annehmen, wenn der mit dem anströmseitigen ersten Drucksensor 17 ermittelte aktuelle anströmseitige Druck oberhalb des anströmseitigen Grenzdrucks liegt. Liegt der aktuelle anströmseitige Druck jedoch unterhalb des anströmseitigen Grenzdrucks, kann die Steuereinrichtung, 7 davon ausgehen, dass die zweite Viskosität vorliegt. Zusätzlich oder alternativ kann die Steuereinrichtung 7 einen vorbestimmten abströmseitigen Grenzdruck überwachen. Liegt der mithilfe des abströmseitigen zweiten Drucksensor 18 ermittelte aktuelle abströmseitige Druck im Hydraulikmittel 8 unterhalb dieses abströmseitigen Grenzdrucks, kann die Steuereinrichtung 7 davon ausgehen, dass die erste Viskosität vorliegt. Liegt der aktuelle abströmseitige Druck jedoch oberhalb des abströmseitigen Grenzdrucks, kann die Steuereinrichtung 7 davon ausgehen, dass die zweite Viskosität vorliegt. Ebenso ist denkbar, dass die Steuereinrichtung 7 mithilfe der beiden Drucksensoren 17, 18 eine Druckdifferenzmessung durchführt und dabei einen vorbestimmten maximalen Differenzdruck überwacht. Übersteigt die aktuelle Druckdifferenz den vorbestimmten Grenzwert, geht die Steuereinrichtung 7 davon aus, dass die erste Viskosität vorliegt. Bleibt die aktuelle Druckdifferenz dagegen unterhalb des vorbestimmten Grenzdrucks, kann die Steuereinrichtung 7 davon ausgehen, dass die zweite Viskosität vorliegt. Der Grenzdruck kann statisch vorgegeben, also fixiert sein. Ebenso ist denkbar, den Grenzdruck dynamisch vorzugeben, insbesondere kann der Grenzdruck z.B. vom Verschmutzungsgrad des Filterkörpers 12 bzw. des Filtermaterials 13 und/oder von der Standzeit des Filterelements 10 abhängen.

Grundsätzlich kann das Filtermaterial aus 13 ausschließlich aus den elektroaktiven Fasern 14 bestehen. Bevorzugt wird jedoch gemäß Figur 3 eine Ausführungsform, bei der das Filtermaterial 13 aus einem Gemisch aus elektroaktiven Fasern 14 und anderen Fasern 19 besteht, wobei diese anderen Fasern 19 aus einem elektrisch nicht aktiven Material bestehen. Figur 3 zeigt dabei einen einlagigen Aufbau des Filtermaterials 13.

Im Unterschied dazu zeigen die Figuren 4 und 5 einen wenigstens zweilagigen Aufbau des Filtermaterials 13, wobei klar ist, dass das Filtermaterial 13 auch weitere Lagen aufweisen kann. Jedenfalls besitzt das Filtermaterial 13 gemäß den Figuren 4 und 5, eine erste Lage 20 sowie eine zweite Lage 21, die fest miteinander verbunden sind. Die erste Lage 20 weist die elektroaktiven Fasern 14 auf. Die zweite Lage 21 weist dagegen keine elektroaktiven Fasern 14 auf. Dabei ist grundsätzlich denkbar, dass die erste Lage 20 ausschließlich aus den elektroaktiven Fasern 14 besteht. Ebenso ist denkbar, dass die erste Lage 20 wie die in Figur 3 gezeigte einlagige Variante des Filtermaterials 13 aus einem Gemisch aus den elektroaktiven Fasern 14 und den anderen, elektrisch nicht aktiven Fasern 19 besteht. Die zweite Lage 21 kann aus einem grundsätzlich beliebigen Filtermaterial bestehen, das zur Partikelfiltration geeignet ist. In den gezeigten Beispielen der Figuren 4 und 5 ist jeweilige zweite Lage 21 ebenfalls mit Fasern gebildet, wobei hier wieder die anderen Fasern 19 zum Einsatz kommen, die aus einem elektrisch nicht aktiven Material bestehen. Es ist klar, dass die anderen Fasern 19 auch durch ein Gemisch unterschiedlicher anderer Fasern 19 gebildet sein können, solange sie keine elektroaktiven Fasern 14 enthalten.

Gemäß Figur 4 können die beiden Lagen 20, 21 miteinander verklebt bzw. kaschiert sein. Die Verklebung oder Kartierung ist in Figur 4 mit 22 bezeichnet und kann sich beim Anbringen der ersten Schicht 20 auf die zweite Schicht 21 ausbilden. Beispielsweise wird zunächst die zweite Schicht 21 hergestellt, während die erste Schicht 20 auf die fertige zweite Schicht 21 aufkaschiert wird. Ebenso ist denkbar, zuerst die erste Schicht 20 herzustellen und anschließend die zweite Schicht 21 aufzukaschieren. Weiter ist denkbar, beide Schichten 20, 21 parallel herzustellen und an geeigneter Stelle miteinander zu verbinden.

Im Unterschied dazu zeigt Figur 5 eine Ausführungsform, bei der das Filtermaterial 13 zwischen der ersten Schicht 20 und der zweiten Schicht 21 einen Kontaktbereich 23 aufweist, der in Figur 5 durch unterbrochene Linien und eine geschweifte Klammer angedeutet ist. In diesem Kontaktbereich 23 stehen die beiden Lagen 20 um 21 miteinander in Kontakt, wobei die Fasern 14 der ersten Lage 20 mit den Fasern 19 der zweiten Lage 21 in diesem Kontaktbereich 23 miteinander in Eingriff stehen. Dieses ineinander Eingreifen der Fasern 14, 19 der beiden Lagen 20, 21 lässt sich zweckmäßig im Rahmen der Herstellung des Filtermaterials 13 realisieren, wenn die beiden Lagen 20, 21 nahezu gleichzeitig hergestellt und noch in einem unfertigen Zustand zum Filtermaterial 13 zusammengefügt werden. Insbesondere sind die Lagen 20, 21 unmittelbar nach ihrer Herstellung nass und werden noch im nassen Zustand zum Filtermaterial 13 zusammengefügt, sodass sie gemeinsam austrocknen. Dabei entsteht der Kontaktbereich 23.

Entsprechend Figur 2 kann das Filtergehäuse 11 außen, also an seiner Außenseite einen elektrischen Gehäuseanschluss 24 aufweisen, der über die Steuerleitungen 9 mit der Steuereinrichtung 7 elektrisch verbunden ist. Ferner weist das Filtergehäuse 11 innen, also an seiner Innenseite 2 elektrische Gehäusekontakte 25 auf, die mit dem Gehäuseanschluss 9 elektrisch verbunden sind. Entsprechende Verbindungsleitungen 26 können dabei innerhalb des Gehäuses 11 verlaufen und den jeweiligen Gehäusekontakt 25 mit dem Gehäuseanschluss 24 elektrisch verbinden. Auch der zuvor genannte Temperatursensor 15 und die zuvor genannten Drucksensoren 17, 18 können zweckmäßig über entsprechende Verbindungsleitungen 26 mit diesem Gehäuseanschluss 24 elektrisch verbunden sein.

Das Filterelement 10 weist nun zwei elektrische Elementkontakte 27 auf, die am Filterelement 10 so angeordnet sind, dass über diese Elementkontakte 27 eine elektrische Spannung an das Filtermaterial 13 angelegt werden kann. Ferner sind diese Elementkontakte 27 so auf die Gehäusekontakte 25 abgestimmt, dass bei in das Filtergehäuse 11 eingesetztem Filterelement 10 die beiden Elementkontakte 27 mit den beiden Gehäusekontakten 25 elektrisch kontaktiert sind. Zweckmäßig sind die Elementkontakte 27 komplementär zu den Gehäusekontakten 25 gestaltet. Somit kann die Steuereinrichtung 7 über die Steuerleitungen 9 und über den Gehäuseanschluss 24, über die entsprechenden Verbindungsleitungen 26, über die Gehäusekontakte 25 und die Elementkontakte 27 eine elektrische Spannung an das Filtermaterial 13 anlegen.

## Patentansprüche

1. Hydraulikkreis (1) zum Zirkulieren eines Hydraulikmittels (8) für eine Maschine (3), insbesondere zum Betreiben und/oder Kühlen und/oder Schmieren wenigstens einer Maschinenkomponente (28) der Maschine (3),
- mit einem Leitungssystem (2) zum Führen des Hydraulikmittels (8),
- mit wenigstens einer in das Leitungssystem (2) eingebundenen Fördereinrichtung (4) zum Antreiben des Hydraulikmittels (8),
- mit wenigstens einem in das Leitungssystem (2) eingebundenen Reservoir (5) zum Bevorraten des Hydraulikmittels (8),
- mit wenigstens einer in das Leitungssystem (2) eingebundenen Filtereinrichtung (6) zum Filtern des Hydraulikmittels (8),
- mit einer Steuereinrichtung (7) zum Betreiben des Hydraulikkreises (1),
- wobei die jeweilige Filtereinrichtung (6) wenigstens ein Filterelement (10) aufweist, das einen Filterkörper (12) mit einem Filtermaterial (13) aufweist,
- wobei das jeweilige Filterelement (10) so in der zugehörigen Filtereinrichtung (6) angeordnet ist, dass im Betrieb des Hydraulikkreises (1) das Filtermaterial (13) vom Hydraulikmittel (8) durchströmt wird,
- wobei das Filtermaterial (13) elektroaktive Fasern (14) aus einem elektroaktiven Polymer aufweist, die in Abhängigkeit einer daran anliegenden elektrischen Spannung ihre geometrische Form und/oder Größe verändern,
- wobei das Filtermaterial (13) so konfiguriert ist, dass das Verändern der Form und/oder Größe der elektroaktiven Fasern (14) eine Porengröße des Filtermaterials (13) verändert,
- wobei die Steuereinrichtung (7) mit der jeweiligen Filtereinrichtung (6) elektrisch gekoppelt und so konfiguriert ist, dass sie in Abhängigkeit einer Viskosität des Hydraulikmittels (8) das Filtermaterial (13) des jeweiligen Filterelements (10) zum Verändern der Porengröße ansteuert.

2. Hydraulikkreis (1) nach Anspruch 1,
**dadurch gekennzeichnet,**
**dass** die Steuereinrichtung (7) so konfiguriert ist, dass sie bei einer ersten Viskosität, die größer ist als eine zweite Viskosität, eine erste Porengröße einstellt, die größer ist als eine zweite Porengröße, die bei der zweiten Viskosität eingestellt wird.

3. Hydraulikkreis (1) nach Anspruch 2,
**dadurch gekennzeichnet,**
**dass** die Steuereinrichtung (7) so konfiguriert ist, dass sie bei der ersten Viskosität zum Einstellen der ersten Porengröße eine vorbestimmte erste Spannung am Filtermaterial (13) anlegt, während sie bei der zweiten Viskosität zum Einstellen der zweiten Porengröße eine zweite Spannung, die kleiner ist als die erste Spannung, oder keine Spannung am Filtermaterial (13) anlegt.

4. Hydraulikkreis (1) nach Anspruch 2 oder 3,
**dadurch gekennzeichnet,**
**dass** die Steuereinrichtung (7) so konfiguriert ist, dass sie die aktuelle Viskosität mit einer vorbestimmten Grenzviskosität vergleicht und davon ausgeht, dass die erste Viskosität vorliegt, wenn die aktuelle Viskosität oberhalb der Grenzviskosität ist, und davon ausgeht, dass die zweite Viskosität vorliegt, wenn die aktuelle Viskosität kleiner ist als die Grenzviskosität.

5. Hydraulikkreis (1) nach einem der Ansprüche 2 bis 4,
**dadurch gekennzeichnet,**
- **dass** die Steuereinrichtung (7) so konfiguriert ist, dass sie den Hydraulickreis (1) in einem Nennbetrieb und in einem Startbetrieb betreiben kann, wobei die Steuereinrichtung (7) die Filtereinrichtung (6) für den Startbetrieb zum Einstellen einer ersten Porengröße ansteuert und für den Nennbetrieb zum Einstellen einer zweiten Porengröße ansteuert, die kleiner ist als die erste Porengröße, und/oder
- **dass** die zweite Viskosität einem Nennbetrieb des Hydraulikkreises (1) zugeordnet ist, und/oder
- **dass** die erste Viskosität einem Startbetrieb des Hydraulikkreises (1) zugeordnet ist.

6. Hydraulikkreis (1) nach einem der vorhergehenden Ansprüche,
**dadurch gekennzeichnet,**
- **dass** der Hydraulikkreis (1) wenigstens einen Temperatursensor (15) zum Ermitteln der Temperatur des Hydraulikmittels (8) aufweist,
- **dass** die Steuereinrichtung (7) elektrisch mit dem jeweiligen Temperatursensor (15) gekoppelt ist und so konfiguriert ist, dass sie die Viskosität des Hydraulikmittels (8) in Abhängigkeit der Temperatur des Hydraulikmittels (8) ermittelt.

7. Hydraulikkreis (1) nach Anspruch 6,
**dadurch gekennzeichnet,**
**dass** der jeweilige Temperatursensor (15) im oder am Reservoir (5) oder in oder an der Filtereinrichtung (6) angeordnet ist.

8. Hydraulikkreis (1) nach einem der vorhergehenden Ansprüche,
**dadurch gekennzeichnet,**
- **dass** der Hydraulikkreis (1) wenigstens einen Drucksensor (17, 18) zum Ermitteln des Drucks des Hydraulikmittels (8) aufweist,
- **dass** die Steuereinrichtung (7) elektrisch mit dem jeweiligen Drucksensor (17, 18) gekoppelt ist und so konfiguriert ist, dass sie die Viskosität des Hydraulikmittels (8) in Abhängigkeit des Drucks des Hydraulikmittels (8) ermittelt.

9. Hydraulikkreis (1) nach einem der Ansprüche 1 bis 8,
**dadurch gekennzeichnet,**
**dass** das Filtermaterial (13) aus den elektroaktiven Fasern (14) besteht.

10. Hydraulikkreis (1) nach einem der Ansprüche 1 bis 8,
**dadurch gekennzeichnet,**
**dass** das Filtermaterial (13) aus einem Gemisch aus elektroaktiven Fasern (14) und anderen Fasern (19) besteht, wobei die anderen Fasern (19) aus einem elektrisch nicht aktiven Material bestehen.

11. Hydraulikkreis (1) nach einem der Ansprüche 1 bis 8,
**dadurch gekennzeichnet,**
- **dass** das Filtermaterial (13) wenigstens zweilagig ausgestaltet ist und eine erste Lage (20) und eine zweite Lage (21) aufweist, die fest miteinander verbunden sind,
- **dass** die erste Lage (20) die elektroaktiven Fasern (14) aufweist,
- **dass** die zweite Lage (21) keine elektroaktiven Fasern (14) aufweist.

12. Hydraulikkreis (1) nach Anspruch 11,
**dadurch gekennzeichnet,**
- **dass** die erste Lage (20) mit der zweiten Lage (21) verklebt und/oder kaschiert ist, oder
- **dass** in einem Kontaktbereich (23), in dem die erste Lage (20) mit der zweiten Lage (21) in Kontakt steht, die Fasern (14, 19) der ersten Lage (20) mit den Fasern (19) der zweiten Lage (21) in Eingriff stehen.

13. Hydraulikkreis (1) nach einem der vorhergehenden Ansprüche,
**dadurch gekennzeichnet,**
- **dass** die jeweilige Filtereinrichtung (6) ein Filtergehäuse (11) aufweist, das außen einen elektrischen Gehäuseanschluss (24) aufweist, der mit der Steuereinrichtung (7) elektrisch verbunden ist,
- **dass** das Filtergehäuse (11) innen zwei elektrische Gehäusekontakte (25) aufweist, die mit dem Gehäuseanschluss (24) elektrisch verbunden sind,
- **dass** das jeweilige Filterelement (10) zwei elektrische Elementkontakte (27) aufweist, über die eine elektrische Spannung an das Filtermaterial (13) anlegbar ist und die bei in das Filtergehäuse (11) eingesetztem Filterelement (10) mit den Gehäusekontakten (25) elektrisch kontaktiert sind.

14. Filterelement (10) für einen Hydraulikkreis (1) nach einem der vorhergehenden Ansprüche,
- wobei das Filterelement (10) zum Filtern eines Hydraulikmittels (8) einen Filterkörper (12) aufweist, der ein vom Hydraulikmittel (8) durchströmbares Filtermaterial (13) aufweist,
- wobei das Filterelement (10) zwei elektrische Elementkontakte (27) aufweist, über die eine elektrische Spannung an das Filtermaterial (13) anlegbar ist,
- wobei das Filtermaterial (13) elektroaktive Fasern (14) aus einem elektroaktiven Polymer aufweist, die in Abhängigkeit einer daran anliegenden elektrischen Spannung ihre geometrische Form und/oder Größe verändern,
- wobei das Filtermaterial (13) so konfiguriert ist, dass das Verändern der Form und/oder Größe der elektroaktiven Fasern (14) eine Porengröße des Filtermaterials (13) verändert.

15. Maschine (3)
- mit wenigstens einer mit einem Hydraulikmittel (8) zu betreibenden und/oder zu kühlenden und/oder zu schmierenden Maschinenkomponente (28),
- mit wenigstens einen Hydraulikkreis (1) nach einem der Ansprüche 1 bis 13 aufweist,
- wobei die jeweilige Maschinenkomponente (28) in das Leitungssystem (2) des Hydraulikkreises (1) eingebunden ist.
